# EUROPÄISCHE PATENTSCHRIFT

(11) **EP 2 174 006 B1**
(45) Veröffentlichungstag und Bekanntmachung des Hinweises auf die Patenterteilung: **18.04.2012**
(21) Anmeldenummer: 08773819.1
(22) Anmeldetag: 02.07.2008
(51) Int. Cl.: F04B 1/04, F04B 11/00, F04B 53/16, B60T 8/40

(54) **KOLBENPUMPE UND BETRIEBSVERFAHREN HIERFÜR**
PISTON PUMP AND OPERATING METHOD THEREFOR
POMPE À PISTONS ET PROCÉDÉ PERMETTANT SON FONCTIONNEMENT

(30) Priorität: 17.07.2007 DE 102007033244
(43) Veröffentlichungstag der Anmeldung: 14.04.2010
(60) Teilanmeldung: 11002510.3
(73) Patentinhaber: Lucas Automotive GmbH, 56070 Koblenz (DE)
(72) Erfinder: PLEWNIA, Heinrich, 56316 Niederhofen (DE); SEIBERT, Werner, 56206 Kammerforst (DE)
(74) Vertreter: Röthinger, Rainer
(86) Internationale Anmeldenummer: PCT/EP2008/005407
(87) Internationale Veröffentlichungsnummer: WO 2009/010191

(56) Entgegenhaltungen:
- WO-A-2007/024636
- CH-A- 374 042
- DE-A1- 4 229 969
- DE-A1- 19 961 851
- DE-A1-102005 046 619
- DE-B- 1 045 806
- US-A1- 2007 176 484

## Beschreibung

### Technisches Gebiet

Die vorliegende Erfindung betrifft allgemein die Hydraulikdruck-Erzeugung in einer Fahrzeug-Bremsanlage. Insbesondere ist die Erfindung auf eine wenigstens sechs Zylinder/Kolben-Anordnungen umfassende Hydraulikpumpe gerichtet.

### Technischer Hintergrund

Moderne hydraulische oder elektrohydraulische Fahrzeugbremsanlagen erfordern zuverlässige Druckerzeuger, um sicherheitsrelevante Funktionen wie eine Antiblockierregelung oder eine Antriebsschlupfregelung implementieren zu können. Bei diesen Funktionen wird mittels des Druckerzeugers ein Hydraulikdruck zur Ansteuerung einer oder mehrerer Radbremsen generiert.

Ein derartiger Druckerzeuger ist beispielsweise aus der WO 2006/061178 A1 bekannt. Der Druckerzeuger umfasst eine Kolbenpumpe sowie einen elektromotorischen Aktuator zur Betätigung der Kolbenpumpe. Die Kolbenpumpe besitzt ein Gehäuse, in dem mehrere Zylinderbohrungen zur Aufnahme je eines Pumpenkolbens ausgebildet sind.

Je nach Bauform umfasst die in der WO 2006/061178 A1 beschriebene Kolbenpumpe 5, 6, 8 oder mehr Zylinder/Kolben-Anordnungen. Bei einer mehrkreisigen Fahrzeug-Bremsanlage können die einzelnen Zylinder/Kolben-Anordnungen in mehrere Sätze unterteilt und jeder Satz je einem Hydraulikkreis zugeordnet werden. Je mehr Zylinder/Kolben-Anordnungen dabei pro Satz vorgesehen sind, desto geringer sind die sich bei Regeleingriffen ergebenden Druckpulsationen und desto höher ist folglich der Betriebskomfort.

Aus der WO 99/64283, welche eine Kraftfahrzeug-Bremsanlage gemäß dem Oberbegriff von Patentanspruch 1 offenbart, ist es bekannt, pro Hydraulikkreis je einen Satz von drei Zylinder/Kolben-Anordnungen vorzusehen. Die drei Zylinder/Kolben-Anordnungen jedes Hydraulikkreises sind dabei sternförmig innerhalb einer Ebene angeordnet. Die beiden sich derart ergebenden Ebenen sind parallel zueinander angeordnet und werden von einer gemeinsamen Exzenterwelle senkrecht durchsetzt. Die elektromotorisch angetriebene Exzenterwelle wirkt in bekannter Weise mit den in Richtung auf die Exzenterwelle vorgespannten Kolben zusammen, um Hydraulikfluid zu den Radbremsen oder von den Radbremsen weg zu fördern.

In der DE 42 29 969 A1 wird eine Pumpenanordnung eines hydropneumatischen Aggregats gelehrt, welche einen Gehäuseblock umfasst, in welchem sechs Zylinder zur jeweiligen Aufnahme eines Kolbens sowie ein Freiraum zur Aufnahme einer Antriebswelle vorgesehen ist. Die sechs Zylinder sind dabei paarweise auf drei axial voneinander beabstandeten Ebenen im Gehäuse angeordnet, wobei jeweils ein Zylinder eines Paars einer Druckflüssigkeitspumpe und der andere Zylinder einem Gasverdichter zugeordnet ist. Die Druckflüssigkeitspumpe umfasst somit drei parallel geschaltete Zylinder/Kolben-Einheiten, welche auf unterschiedlichen Ebenen angeordnet sind. Die Antriebswelle ist entsprechend der Anordnung der Zylinderpaare mit Exzentern ausgestattet, welche in axialer Richtung angeordnet sind und mit den Kolben des jeweiligen Zylinderpaars zusammenwirken.

Ferner ist aus der CH 374 042 A eine Kolbenmaschine für hydraulische Antriebszwecke bekannt. Die Vorrichtung umfasst ein flach-kastenförmiges Gehäuse mit lösbaren Seitenwänden, in welchen in entsprechend vorgesehenen Einsenkungen sechs Zylinder/Kolben-Anordnungen eingesetzt werden. Um eine kompakte Anordnung zu realisieren, sind die sechs Zylinder/Kolben-Anordnungen paarweise auf drei Ebenen im Gehäuse angeordnet, wobei sich die Kolben eines jeden Paars diametral gegenüber liegen und mit dem jeweiligen Exzenter einer an den Gehäusestirnwänden drehbar gelagerten Welle zusammenwirken.

Zusätzlich ist aus der DE 10 2005 046619 A1 ein Hydraulikblock für eine hydraulische Fahrzeugbremsanlage bekannt, welcher Bohrungen zur Aufnahme einer Exzenterwelle, zweier Kolbenpumpen und weiterer hydraulischer Bauelemente aufweist. Die beiden Pumpenbohrungen zur Aufnahme der Kolbenpumpen sind in Boxeranordnung im Hydraulikblock ausgebildet und münden jeweils in einen senkrecht dazu als Bohrung ausgebildeten Exzenterraum.

Die DE 10 45 806 B lehrt ferner eine ein- oder mehrstufige Kolbenpumpe, welche durch eine Kolben-Brennkraftmaschine angetrieben wird. Die zwei oder mehreren Zylinder/Kolben-Anordnungen können einzeln oder paarweise gegenüberliegend auf verschiedenen Ebenen angeordnet sein. Die Kolben werden durch die Brennkraftmaschine mittels einer Pleuelstange ausgelenkt, welche an einem Ende der Kolbenpumpenanordnung schwenkbar gelagert ist und mit den jeweiligen Kolben über Kolbenstangen in Verbindung steht, welche hierfür entlang der Pleuelstange angelenkt sind. Die Zylinder der Kolbenpumpe werden dabei zu einer oder mehreren Zylindergruppen zusammengefasst, so dass durch Zuschalten oder Abschalten einzelner Zylindergruppen das Fördervolumen der Kolbenpumpe variierbar ist.

Der Erfindung liegt die Aufgabe zugrunde, die Lebensdauer der bekannten Mehrkolbenpumpen bei gleichbleibendem Betriebskomfort zu erhöhen.

### Kurzer Abriss

Zur Lösung dieser Aufgabe wird eine Kraftfahrzeug-Bremsanlage mit einem ersten Bremskreis, einem zweiten Bremskreis und einem Hydraulikdruck-Erzeuger mit einem Kolbenpumpen-Gehäuse bereitgestellt, wobei das Kolbenpumpen-Gehäuse eine Bohrung zur Aufnahme einer Exzenterwelle sowie wenigstens sechs Zylinder zur Aufnahme je eines Pumpenkolbens umfasst und wobei die Zylinder paarweise in wenigstens drei voneinander beabstandeten Ebenen angeordnet sind und jeweils in die Bohrung münden. Die wenigstens sechs in dem Kolbenpumpen-Gehäuse vorgesehenen Zylinder sind dabei in zwei Zylindersätze aufgeteilt, wobei jeweils wenigstens drei, auf unterschiedlichen Ebenen angeordnete Zylinder einen eigenen Satz bilden, und wobei der erste Satz Zylinder dem ersten Bremskreis und der zweite Satz Zylinder dem zweiten Bremskreis zugeordnet ist.

Umfasst das Kolbenpumpen-Gehäuse mehr als sechs Zylinder, können die überzähligen Zylinder ebenfalls auf die beiden Zylindersätze verteilt werden oder aber einen dritten oder vierten usw. Zylindersatz bilden. So ist es beispielsweise denkbar, dass neben dem ersten Satz Zylinder, welcher dem ersten Bremskreis zugeordnet ist, und dem zweiten Satz Zylinder, welcher dem zweiten Bremskreis zugeordnet ist, ein optional vorhandener dritter Satz Zylinder für eine Bremskraftverstärkung vorgesehen werden kann. Die Zylinder eines jeden Satzes können in einen gemeinsamen Fluidanschluss münden.

Ist das Kolbenpumpen-Gehäuse mit acht, zehn oder mehr Zylindern ausgebildet, steigt die Anzahl der Zylinderebenen entsprechend auf vier, fünf oder mehr. Da für die beiden Pumpenkolben jeder Ebene ein separater Exzenter vorgesehen werden kann, vermindert sich der Exzenter-Verschleiß gegenüber den bekannten Mehrkolbenpumpenanordnungen mit drei, fünf oder gar acht Pumpenkolben pro Ebene und Exzenter.

Für drei oder mehr, auf unterschiedlichen Ebenen angeordnete Zylinder kann ein gemeinsamer Fluidkanal, welcher die einzelnen Zylinder miteinander verbindet, vorgesehen sein. Es besteht die Möglichkeit, die einzelnen Zylinder derart relativ zueinander anzuordnen, dass der Fluidkanal geradlinig verläuft. Ein geradlinig verlaufender Fluidkanal kann mit einer einzigen Bohrung realisiert werden. Es ist auch denkbar, zwei (oder mehr) geradlinig verlaufende Fluidkanäle vorzusehen, wobei der erste Fluidkanal dann die Zylinder des ersten Satzes und der zweite Fluidkanal die Zylinder des zweiten Satzes miteinander verbindet.

Jeder Fluidkanal kann zwei gegenüberliegende Enden aufweisen. Ein erstes Ende kann durch ein separates Verschlusselement verschlossen sein oder als Grund eines Sacklochs ausgebildet werden. An seinem dem ersten Ende gegenüberliegenden Ende kann jeder Fluidkanal in einen Fluidanschluss münden. Gegenüber herkömmlichen Lösungen, bei denen ein Fluidkanal lediglich zwei, auf unterschiedlichen Ebenen gelegen Zylinder miteinander verbindet, kann die Anzahl der insgesamt vorzusehenden Verschlusselemente dadurch reduziert werden, dass, wie oben geschildert, mittels eines einzigen, geradlinig verlaufenden Fluidkanals drei oder mehr, auf unterschiedlichen Ebenen angeordnete Zylinder miteinander verbunden werden.

Zwei in benachbarten Ebenen angeordnete Zylinder desselben Satzes können einen Winkelabstand zueinander bezüglich der Aufnahmebohrung für die Exzenterwelle besitzen. Mit anderen Worten, die einzelnen Zylinder eines Satzes müssen nicht deckungsgleich hintereinander angeordnet werden. Ein gewisser Winkelversatz von auf benachbarten Ebenen angeordneten Zylinder ermöglicht beispielsweise eine dichtere Packung der einzelnen Ebenen und Zylinder (nach Art einer hexagonal dichten Packung) und damit geringere Gehäuseabmessungen. Beispielsweise kann im Fall eines solchen Winkelabstands von auf benachbarten Ebenen angeordneten Zylindern der Abstand zweier benachbarter Ebenen geringer als der maximale Durchmesser eines Zylinders gewählt werden.

Innerhalb einer einzelnen Ebene können sich die beiden Zylinder ungefähr gegenüberliegen. So kann der Winkelabstand der in einer einzelnen Ebene angeordneten beiden Zylinder innerhalb dieser Ebene bezüglich der Aufnahmebohrung für die Exzenterwelle ungefähr wenigstens 135° betragen. Als zweckmäßig hat sich beispielsweise ein Winkelabstand von ungefähr 150° herausgestellt.

Gemäß einem weiteren Aspekt umfasst der Hydraulikdruck-Erzeuger neben dem bereits erläuterten Kolbenpumpen-Gehäuse noch in den Zylindern des Gehäuses aufgenommene Pumpenkolben sowie eine in der Bohrung des Gehäuses aufgenommene Exzenterwelle zur Betätigung der Pumpenkolben umfasst. Auf der Exzenterwelle kann pro Ebene ein Exzenter vorgesehen sein. Die Exzenter können entweder einstückig mit der Exzenterwelle gefertigt werden oder aber separate Bauelemente darstellen. Bei drei Zylinderebenen und einem Exzenter pro Zylinderebene können die drei Exzenter relativ zueinander in Winkelstellungen von ungefähr 0°, 120° und 240° bezüglich einer Längsachse der Exzenterwelle angeordnet sein.

Neben dem Gehäuse, den Kolben und der Exzenterwelle kann der Hydraulikdruck-Erzeuger noch einen Antrieb für die Exzenterwelle umfassen. Bei diesem Antrieb handelt es sich beispielsweise um einen Elektromotor. Der Elektromotor kann in einem separaten Gehäuse untergebracht sein, welches an dem Kolbenpumpen-Gehäuse befestigbar ist.

Mittels des Hydraulikdruck-Erzeugers lässt sich eines bzw. lassen sich mehrere der nachfolgend aufgeführten Systeme realisieren: ein hydraulisches Bremskraftverstärkersystem, ein Antiblockiersystem (ABS), ein System zur Abstandsregelung, ein Antriebsschlupf-Regelsystem und ein Fahrstabilitätssystem (auch als elektronisches Stabilitätsprogramm, ESP, bezeichnet).

Ein weiterer Aspekt ist auf ein Verfahren zum Betreiben eines Hydraulikdruck-Erzeugers in einer Fahrzeug-Bremsanlage mit einem ersten Bremskreis und einem zweiten Bremskreis gerichtet, wobei der Hydraulikdruck-Erzeuger eine Kolbenpumpe mit sechs Zylindern und je einem darin aufgenommenen Pumpenkolben besitzt, wobei die Kolben paarweise in wenigstens drei voneinander beabstandeten Ebenen angeordnet sind und wobei jeweils drei, auf unterschiedlichen Ebenen angeordnete Pumpenkolben einen Satz bilden und wobei der erste Satz Pumpenkolben dem ersten Bremskreis und der zweite Satz Pumpenkolben dem zweiten Bremskreis zugeordnet ist. Das Verfahren umfasst den Schritt des Betätigens der Kolben derart, dass ein Phasenversatz zwischen einem oberen Totpunkt des einen und einem unteren Totpunkt des anderen Kolbens ein und derselben Ebene ungefähr 30° beträgt und der minimale Phasenversatz der Totpunkte von Kolben unterschiedlicher Ebenen sich ebenfalls ungefähr 30° beläuft.

### Kurze Beschreibung der Zeichnungen

Weitere Einzelheiten und Vorteile der Erfindung ergeben sich aus der nachfolgenden Beschreibung bevorzugter Ausführungsbeispiele sowie aus den Figuren. Es zeigt:
- Fig. 1: ein Ausführungsbeispiel eines Kolbenpumpen-Gehäuses in einer perspektivischen Ansicht;
- Fig. 2: eine Seitenansicht des Gehäuses gemäß Fig. 1;
- Fign. 3a bis 3c: drei Schnittansichten des Gehäuses gemäß Fig. 1 entlang der Linien A-A, B-B und C-C in Fig. 1;
- Fig. 4: eine schematische Darstellung des Phasenversatzes oberer und unterer Totpunkte von in das Gehäuse gemäß Fig. 1 eingesetzten Pumpenkolben; und
- Fig. 5: eine schematische Darstellung der Anordnung einer das Gehäuse gemäß Fig. 1 umfassenden Kolbenpumpe in einer Fahrzeug-Bremsanlage.

### Beschreibung bevorzugter Ausführungsbeispiele

Im Folgenden wird ein Druckerzeuger in Gestalt einer exemplarischen Mehrkolbenpumpe mit sechs Zylinder/Kolben-Anordnungen sowie deren Einsatz in einer hydraulischen Fahrzeug-Bremsanlage beschrieben. Der vorgestellte Druckerzeuger liefert den zur radindividuellen Ansteuerung von vier Radbremsen benötigten hydraulischen Druck und ist Bestandteil eines ESP-Systems mit integrierter ABS-Funktionalität. Abweichend von den vorgestellten Ausführungsbeispielen könnte der Druckerzeuger selbstverständlich auch beispielsweise acht oder mehr Zylinder/Kolben-Anordnungen umfassen. Ferner könnte der Druckerzeuger auch in einer elektrohydraulischen Fahrzeug-Bremsanlage sowie für andere oder zusätzliche Zwecke (wie für ein hydraulisches Bremskraftverstärkersystem) zum Einsatz gelangen.

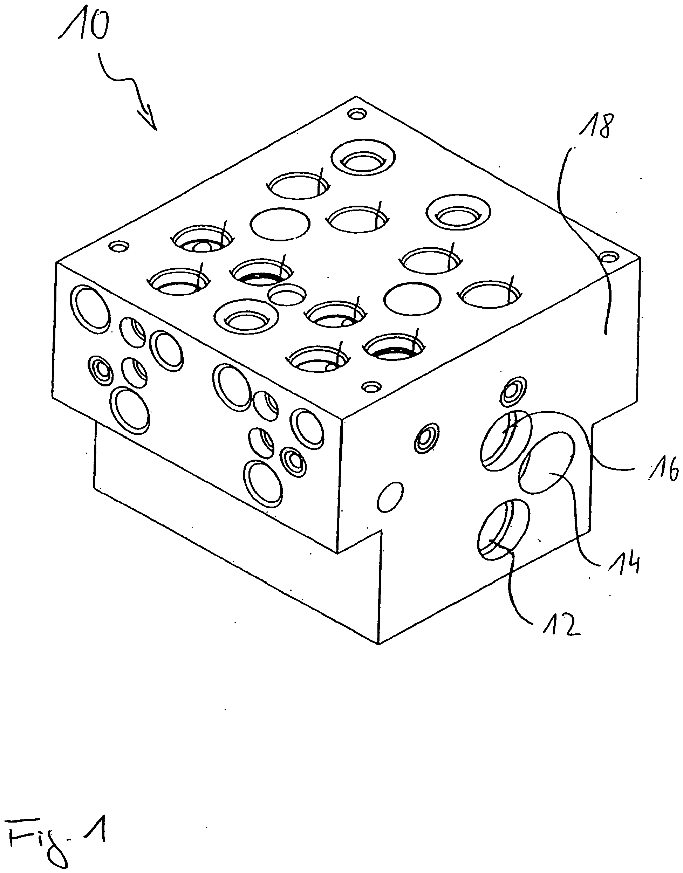

Fig. 1 zeigt eine perspektivische Ansicht eines Kolbenpumpen-Gehäuses 10 des Druckerzeugers. Das Gehäuse 10 besteht aus einem massiven Aluminiumblock, in den eine Vielzahl unterschiedlicher Bohrungen eingebracht ist. Die einzelnen Bohrungen sind für unterschiedliche Zwecke vorgesehen. So dienen einige der Bohrungen als Fluidkanäle und andere der Aufnahme von Hydraulikventilen. Insgesamt sechs weitere Bohrungen fungieren als Zylinder zur Aufnahme je eines Pumpenkolbens. In der perspektivischen Ansicht gemäß Fig. 1 sind drei solche Zylinder 12, 14, 16 dargestellt. Die dargestellten Zylinder 12, 14, 16 münden in entsprechende Öffnungen auf einer Vorderseite 18 des Zylinderblocks 10. Drei weitere solcher Zylinder münden in entsprechende Öffnungen auf der in Fig. 1 nicht erkennbaren Rückseite des Gehäuses 10.

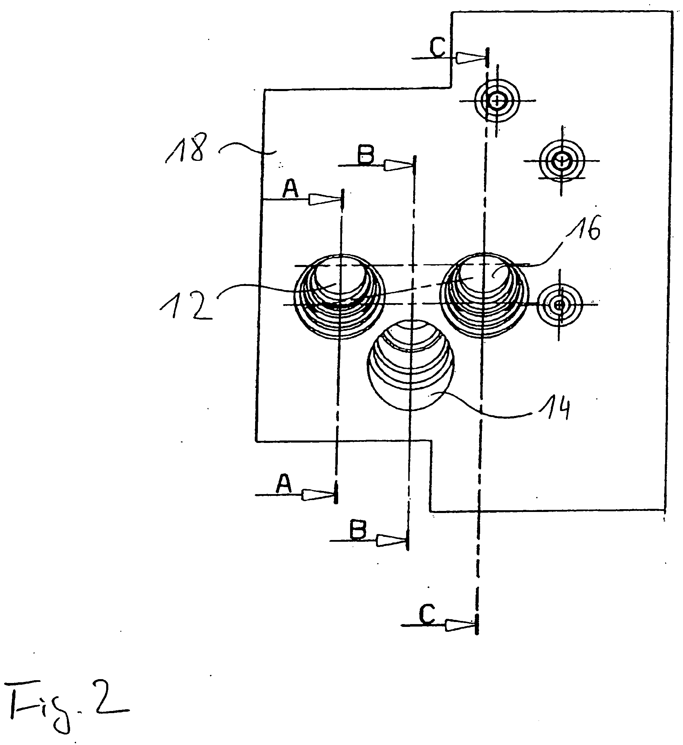

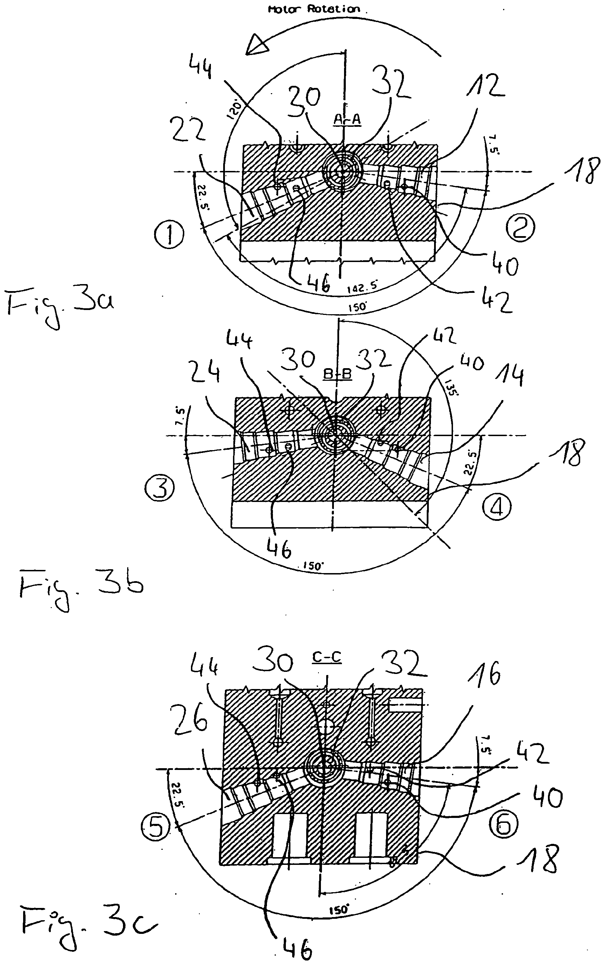

Fig. 2 zeigt eine Ansicht der Vorderseite 18 des Gehäuses 10 mit den in die Vorderseite 18 mündenden drei Zylindern 12, 14 und 16. In Fig. 2 sind drei Schnittlinien A-A, B-B und C-C dargestellt. Die diesen Schnittlinien entsprechenden Schnittansichten sind in den Fign. 3a, 3b und 3c wiedergegeben. Wie diesen Figuren zu entnehmen ist, entspricht jeder Schnittansicht eine senkrecht zur Vorderseite 18 gemäß Fig. 2 verlaufende Ebene mit jeweils zwei darin angeordneten Zylindern. So liegen in der durch die Schnittlinie A-A verlaufenden Ebene gemäß Fig. 3a der Zylinder 12 sowie ein weiterer Zylinder 22. Entsprechend liegen in der durch die Schnittlinie B-B verlaufenden Ebene gemäß Fig. 3b die beiden Zylinder 14 und 24 sowie in der durch die Schnittlinie C-C verlaufenden Ebene gemäß Fig. 3c die Zylinder 16 und 26.

Die drei in den Fign. 3a, 3b und 3c veranschaulichten Ebenen werden von einer senkrecht zu diesen Ebenen verlaufenden Bohrung 30 durchsetzt. In der Bohrung 30 ist eine Exzenterwelle 32 aufgenommen. Die Exzenterwelle 32 besitzt pro Ebene einen Exzenter, der im Ausführungsbeispiel einstückig mit der Welle ausgebildet ist.

Wie den Fign. 3a, 3b und 3c zu entnehmen ist, mündet jeder der Zylinder 12, 14, 16, 22, 24 und 26 in die Aufnahmebohrung 30. Aus diesem Grund können die in den Zylindern 12, 14, 16, 22, 24 und 26 aufzunehmenden Pumpenkolben in bekannter Weise mit den Exzentern zusammenwirken. In Folge dieses Zusammenwirkens führt jeder einzelne Kolben abwechselnd einen Förderhub und einen Rückhub aus. Ein Förderhub bezeichnet einen Hub, bei dem der Kolben das Volumen eines Verdrängungsraums in einem der Zylinder 12, 14, 16, 22, 24 und 26 verkleinert und dadurch Hydraulikfluid aus dem Gehäuse 10 ausstößt. Bei einem Rückhub hingegen wird das Volumen des Verdrängungsraums wieder vergrößert und Hydraulikfluid in das Gehäuse 10 eingesaugt.

Die sechs Zylinder 12, 14, 16, 22, 24 und 26 sind in zwei Zylinder-Sätze aufgeteilt. Ein erster Satz wird von den in den Fign. 3a, 3b und 3c auf der rechten Seite liegenden Zylindern 12, 14 und 16 gebildet. Die verbleibenden Zylinder 22, 24 und 26 auf der linken Seite bilden einen zweiten Zylinder-Satz. Jeder Zylinder-Satz umfasst daher drei einzelne Zylinder.

Die drei Zylinder jedes Zylinder-Satzes sind mittels zweier geradlinig verlaufender Fluidkanäle miteinander verbunden. Genauer gesagt verbinden zwei Fluidkanäle 40, 42 die Zylinder 12, 14 und 16. Zwei weitere Fluidkanäle 44, 46 verbinden hingegen die drei Zylinder 22, 24 und 26. Jeweils zwei dieser insgesamt vier Fluidkanäle 42, 46 münden in Fluideinlässe, um bei einem Rückhub Fluid anzusaugen, während die beiden verbleibenden Fluidkanäle 40, 44 in Fluidauslässe münden, aus denen das von den Kolben verdrängte Hydraulikfluid ausgestoßen wird. Ein Ende jedes der Fluidkanäle 40, 42, 44 und 46 mündet daher in einen Fluidanschluss. Das jeweils gegenüberliegende Ende ist hingegen entweder nach Art eines Sacklochs ausgebildet oder mittels eines separaten Verschlusselements (nicht dargestellt) verschlossen.

Die insgesamt sechs Zylinder 12, 14, 16, 22, 24 und 26 sind also mittels insgesamt nur vier Fluldkanälen 40, 42, 44, 46 miteinander verbunden, die auf einfache Weise durch lediglich vier Bohrungen im Gehäuse 10 ausgebildet werden können. Ferner sind vier Verschlusselemente ausreichend, um die vier Fluidkanäle 40, 42, 44 und 46 fluiddicht abzuschließen. Gegenüber anderen Kolbenpumpen mit sechs Zylinder/Kolbenanordnungen, die auf lediglich zwei Ebenen verteilt sind, müssen bei der Kolbenpumpe des Ausführungsbeispiels daher deutlich weniger Fluidkanäle ausgebildet werden, was die Herstellung beschleunigt und kostengünstiger macht. Ferner sind weniger Verschlusselemente vorzusehen, was ebenfalls die Herstellung günstiger macht und außerdem die Leckanfälligkeit reduziert. Ein weiterer Vorteil der Kolbenpumpe gemäß dem Ausführungsbeispiel besteht darin, dass die insgesamt sechs Zylinder/Kolben-Anordnungen auf drei Ebenen verteilt werden können, so dass jeder einzelne Exzenter mit lediglich zwei Kolben zusammenwirkt. Gegenüber anderen Mehrkolbenpumpen, bei denen sechs Zylinder/Kolben-Anordnungen auf lediglich zwei Ebenen verteilt sind, reduziert sich damit der Verschleiß zwischen Exzenter und Kolbenfuß. Ferner erhöht sich der Wirkungsgrad der Kolbenpumpe.

Wie bei einem Vergleich der Ebene gemäß Fig. 3a mit der Ebene gemäß Fig. 3b bzw. bei einen Vergleich der Ebene gemäß Fig. 3b mit der Ebene gemäß Fig. 3c deutlich wird, besitzen zwei in benachbarten Ebenen angeordnete Zylinder desselben Zylinder-Satzes jeweils einen Winkelabstand von 15° zueinander. Dieser Winkelabstand von 15° ergibt sich aus der Differenz der Neigungen der Zylinder 12, 14, 16, 22, 24 und 26 zur Horizontalen. So beträgt die Neigung des Zylinders 12 zur Horizontalen 7,5° (vgl. Fig. 3a) während sich die Neigung des Zylinders 14 bezüglich der Horizontalen auf 22,5° beläuft (vgl. Fig. 3b). Der Winkelabstand zwischen den Zylindern 12 und 14 beträgt daher 15°.

Der Winkelabstand zwischen auf benachbarten Ebenen angeordneten Zylindern desselben Zylinder-Satzes ermöglicht eine dichtere Packung der Zylinderbohrungen. Dieser Sachverhalt ist beispielsweise aus Fig. 2 ersichtlich. Die dort mit den Linien A-A und B-B angedeuteten benachbarten Ebenen weisen einen Abstand voneinander auf, der geringer als der maximale Durchmesser jedes der Zylindern 12, 14 und 16 ist. Mit anderen Worten, der minimale Abstand zwischen den beiden Zylindern 12 und 16 ist geringer als der maximale Durchmesser des Zylinders 14.

Wie ferner den Fign. 3a, 3b und 3c zu entnehmen ist, liegen sich die in jeweils einer Ebene angeordneten beiden Zylinder 12 und 22 bzw. 14 und 24 bzw. 16 und 26 ungefähr gegenüber. Im Ausführungsbeispiel beträgt der (kleinste) Winkelabstand zwischen den sich nicht unmittelbar gegenüberliegenden Zylindern jedes dieser Zylinderpaare 150°. Es wäre jedoch auch denkbar, den Winkelabstand auf 180° zu erhöhen oder bis auf ungefähr 135° zu reduzieren. Der Ansatz, die beiden in einer Ebene angeordneten Zylinder ungefähr gegenüberliegend vorzusehen, ermöglicht eine weitere Verringerung des Gehäusevolumens insbesondere im Vergleich zu herkömmlichen Mehrkolbenpumpen mit drei oder mehr sternförmig angeordneten Zylindern pro Ebene.

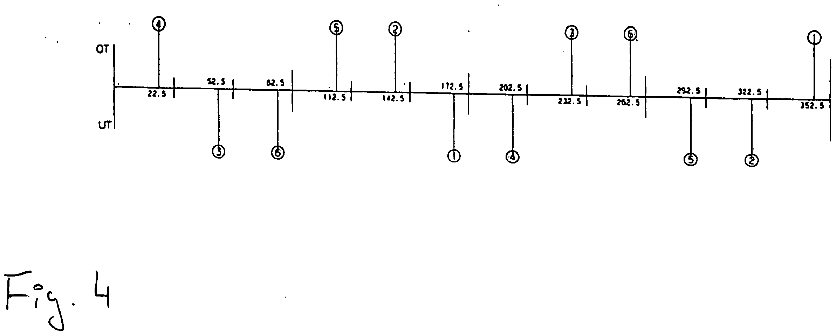

Fig. 4 ist ein schematisches Diagramm, welches den Phasenversatz zwischen einem oberen Totpunkt (OT) und einem unteren Totpunkt (UT) der in den Zylindern 12, 14, 16, 22, 24 und 26 anzuordnenden Kolben bei deren Zusammenwirken mit den Exzentern veranschaulicht. Das Bezugszeichen 1 bezeichnet dabei den (in Fig. 3a nicht dargestellten) Kolben im Zylinder 22. Entsprechend steht 2 für den Kolben im Zylinder 12, 3 für den Kolben im Zylinder 24, 4 für den Kolben im Zylinder 14, 5 für den Kolben im Zylinder 26 und 6 für den Kolben im Zylinder 16.

Bei der graphischen Veranschaulichung gemäß Fig: 4 wird von den in den Fign. 3a, 3b und 3c veranschaulichten Winkellagen der Zylinder 12, 14, 16, 22, 24 und 26 ausgegangen. Ferner wird davon ausgegangen, dass der Winkelversatz zwischen den drei Exzentern auf der Exzenterwelle 32 jeweils 120° beträgt. Wenn man also die Winkelstellung des in Fig. 3a gezeigten Exzenters mit 0° definiert, besitzt der Exzenter gemäß Fig. 3b eine Winkelstellung von 120° und der Exzenter gemäß Fig. 3c eine Winkelstellung von 240°.

Die in den Fign. 3a, 3b und 3c veranschaulichte Wahl der Winkelausrichtungen bewirkt, dass der Phasenversatz bei der in Fig. 3a oben angegebenen Drehrichtung der Exzenterwelle 32 zwischen einem oberen Totpunkt des einen und einem unteren Totpunkt des anderen Kolbens ein und derselben Ebene 30° beträgt. So erreicht Kolben 4 seinen oberen Totpunkt bei 22,5° und der in derselben Ebene angeordnete Kolben 3 seinen unteren Totpunkt bei 52,5°. Der Phasenversatz beträgt also 30°. Derselbe Phasenversatz existiert zwischen dem unteren Totpunkt des Kolbens 6 (82,5°) und dem oberen Totpunkt des in derselben Ebene angeordneten Kolbens 5 (112,5°) sowie dem oberen Totpunkt des Kolbens 2 (142,5°) und dem unteren Totpunkt des in derselben Ebene angeordneten Kolbens 1 (172,5°) und umgekehrt.

Außerdem ist Fig. 4 zu entnehmen, dass der minimale Phasenversatz von Totpunkten der Pumpenkolben unterschiedlicher Ebenen ebenfalls 30° beträgt. So erreicht der Kolben 3 seinen unteren Totpunkt bei 52,5° und der Kolben 6 der benachbarten Ebene seinen unteren Totpunkt bei 82,5°. Entsprechendes gilt für die beiden oberen Totpunkte der Kolben 5 und 2, die beiden unteren Totpunkte der Kolben 1 und 4, die beiden oberen Totpunkte der Kolben 3 und 6, die beiden unteren Totpunkte der Kolben 5 und 2 sowie die beiden oberen Totpunkte der Kolben 1 und 4.

Insgesamt erzielt man durch die in Fig. 4 veranschaulichte Wahl des Phasenversatzes der oberen und unteren Totpunkte eine vorteilhafte Dämpfung von Druckpulsationen nach Art einer 12-Kolbenpumpe.

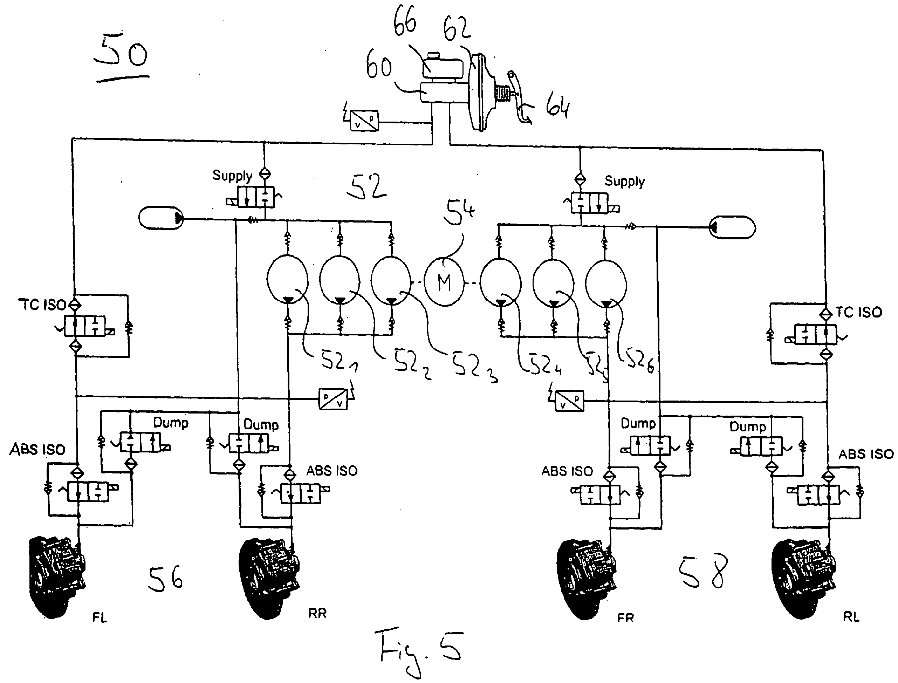

Fig. 5 zeigt eine schematische Darstellung einer zweikreisigen Fahrzeug-Bremsanlage 50, bei der die unter Bezugnahme auf die Fign. 1 bis 4 erläuterte Mehrkolbenpumpe zum Einsatz gelangt. Der Druckerzeuger 52 umfasst sechs Zylinder-Kolben-Anordnungen 52₁, 52₂, 52₃, 52₄, 52₅ und 52₆ sowie einen Antriebsmotor 54. Der Antriebsmotor 54 ist ein Elektromotor, welcher die in den Fign. 3a, 3b und 3c dargestellte Exzenterwelle 32 antreibt.

Die beiden Bremskreise der Fahrzeug-Bremsanlage 50 entsprechen einer Diagonalaufteilung, bei der ein erster Bremskreis 56 das linke Vorderrad FL sowie das rechte Hinterrad RR und ein zweiter Bremskreis 58 das rechte Vorderrad FR sowie das linke Hinterrad RL umfasst. Beide Bremskreise 56, 58 sind im Betriebsbremsbetrieb über einen zweikreisigen Hauptbremszylinder 60 und einen Unterdruck-Bremskraftverstärker 62 mit einem Bremspedal 64 gekoppelt. Im Betriebsbremsbetrieb sind die Ventile TC ISO sowie ABS ISO geöffnet, so dass Fluid aus einem Reservoir 66 in den Hauptbremszylinder 60 und von dort bei einer Betätigung des Pedals 64 zu den vier Radbremsen FL, RR, FR und RL gelangen kann.

Im ABS-Betrieb wird durch ein Zusammenspiel von mittels des Druckerzeugers 52 bewirkten Fluiddruckerhöhungen sowie Druckverringerungen (durch Öffnen der Ventile "Dump") ein ABS-Regeleingriff durchgeführt. Bei Durchführen eines die Traktion erhöhenden Regeleingriffs (Traction Control, TC) oder einer Fahrdynamik-Regelung (ESP oder Vehicle Stability Control, VSC) wird der Hauptbremszylinder 60 durch Schließen der Ventile TC ISO von den Radbremsen FL, RR, FR und RL getrennt und ein Fluiddruck an einer oder mehreren der Radbremsen FL, RR, FR und RL mittels des Druckerzeugers 52 bereitgestellt.

Wie bereits oben erläutert, veranschaulichen die Fign. 1 bis 5 beispielhafte Ausführungsbeispiele. Es steht im Ermessen des Fachmanns, diese Ausführungsbeispiele im Umfang der beigefügten Patentansprüche abzuändern.

## Patentansprüche

1. Kraftfahrzeug-Bremsanlage (50) mit einem ersten Bremskreis (56), einem zweiten Bremskreis (58) und einem Hydraulikdruck-Erzeuger (52) mit einem Kolbenpumpen-Gehäuse (10), wobei das Kolbenpumpen-Gehäuse (10) umfasst:
- eine Bohrung (30) zur Aufnahme einer Exzenterwelle (32); **dadurch gekennzeichnet, dass**
- wenigstens sechs in die Bohrung (30) mündende Zylinder (12, 14, 16, 22, 24, 26) zur Aufnahme je eines Pumpenkolbens (1, 2, 3, 4, 5, 6) vorgesehen sind, wobei die Zylinder paarweise in wenigstens drei voneinander beabstandeten Ebenen (A-A, B-B, C-C) angeordnet und in zwei Sätze aufgeteilt sind, wobei jeweils wenigstens drei, auf unterschiedlichen Ebenen angeordnete Zylinder einen Satz bilden und wobei der erste Satz Zylinder (52₁, 52₂, 52₃) dem ersten Bremskreis (56) und der zweite Satz Zylinder (52₄, 52₅, 52₆) dem zweiten Bremskreis (58) zugeordnet ist.

2. Kraftfahrzeug-Bremsanlage (50) nach Anspruch 1, wobei das Kolbenpumpen-Gehäuse (10) ferner wenigstens einen geradlinig verlaufenden Fluidkanal (40, 42, 44, 46) umfasst, der wenigstens drei, auf unterschiedlichen Ebenen angeordnete Zylinder miteinander verbindet.

3. Kraftfahrzeug-Bremsanlage (50) nach Anspruch 2, **dadurch gekennzeichnet, dass** wenigstens zwei geradlinig verlaufende Fluidkanäle vorhanden sind, wobei der erste Fluidkanal die Zylinder des ersten Satzes und der zweite Fluidkanal die Zylinder des zweiten Satzes miteinander verbindet.

4. Kraftfahrzeug-Bremsanlage (50) nach Anspruch 2 oder 3, **dadurch gekennzeichnet, dass** jeder Fluidkanal an seinem ersten Ende durch ein Verschlusselement verschlossen ist und/oder an seinem zweiten Ende in einen Fluidanschluss mündet.

5. Kraftfahrzeug-Bremsanlage (50) nach einem der Ansprüche 2 bis 4, **dadurch gekennzeichnet, dass** zwei in benachbarten Ebenen angeordnete Zylinder desselben Satzes einen Winkelabstand zueinander senkrecht zur Bohrung besitzen.

6. Kraftfahrzeug-Bremsanlage (50) nach einem der Ansprüche 1 bis 5, **dadurch gekennzeichnet, dass** der Abstand zweier benachbarter Ebenen geringer als der maximale Durchmesser eines Zylinders ist.

7. Kraftfahrzeug-Bremsanlage (50) nach einem der Ansprüche 1 bis 6, **dadurch gekennzeichnet, dass** sich die in einer Ebene angeordneten beiden Zylinder ungefähr gegenüberliegen.

8. Kraftfahrzeug-Bremsanlage (50) nach einem der Ansprüche 1 bis 7, **dadurch gekennzeichnet,**
**dass** der Winkelabstand der in einer Ebene angeordneten beiden Zylinder innerhalb der Ebene bezüglich der Bohrung ungefähr wenigstens 135° beträgt.

9. Kraftfahrzeug-Bremsanlage (50) nach Anspruch 8, **dadurch gekennzeichnet, dass** der Winkelabstand der in einer Ebene angeordneten beiden Zylinder innerhalb der Ebene bezüglich der Bohrung ungefähr 150° beträgt.

10. Kraftfahrzeug-Bremsanlage (50) nach einem der vorhergehenden Ansprüche, wobei der Hydraulikdruck-Erzeuger (52) ferner umfasst:
- in den Zylindern (12, 14, 16, 22, 24, 26) des Kolbenpumpen-Gehäuses (10) aufgenommene Pumpenkolben (1, 2, 3, 4, 5, 6); und
- eine in der Bohrung (30) des Gehäuses aufgenommene Exzenterwelle (32) zur Betätigung der Pumpenkolben.

11. Kraftfahrzeug-Bremsanlage (50) nach Anspruch 10, **dadurch gekennzeichnet, dass** auf der Exzenterwelle (32) pro Ebene ein Exzenter vorgesehen ist und die drei Exzenter relativ zueinander in Winkelstellungen von ungefähr 0°, 120° und 240° bezüglich einer Achse der Exzenterwelle (32) angeordnet sind.

12. Kraftfahrzeug-Bremsanlage (50)nach Anspruch 10, ferner umfassend einen elektromotorischen Antrieb (54) für die Exzenterwelle (32).

13. Verfahren zum Betreiben eines Hydraulikdruck-Erzeugers (52) in einer Fahrzeug-Bremsanlage (50) mit einem ersten Bremskreis (56) und einem zweiten Bremskreis (58), wobei der Hydraulikdruck-Erzeuger (52) eine Kolbenpumpe mit sechs Zylindern sowie je einem darin aufgenommenen Pumpenkolben (52₁, 52₂, 52₃, 52₄, 52₅, 52₆) besitzt, wobei die Pumpenkolben paarweise in wenigstens drei voneinander beabstandeten Ebenen (A-A, B-B, C-C) angeordnet sind und wobei jeweils drei, auf unterschiedlichen Ebenen angeordnete Pumpenkolben einen Satz bilden und wobei der erste Satz Pumpenkolben dem ersten Bremskreis (56) und der zweite Satz Pumpenkolben dem zweiten Bremskreis (58) zugeordnet ist, umfassend den Schritt des Betätigens der Pumpenkolben, derart, dass ein Phasenversatz zwischen einem oberen Totpunkt des einen und einem unteren Totpunkt des anderen Kolbens ein und derselben Ebene ungefähr 30° beträgt und ein minimaler Phasenversatz von Totpunkten der Pumpenkolben unterschiedlicher Ebenen ebenfalls ungefähr 30° beträgt.

## Claims

1. A motor vehicle brake system (50) with a first brake circuit (56), a second brake circuit (58) and a hydraulic pressure generator (52) with a piston pump housing (10), wherein the piston pump housing (10) comprises:
- a bore (30) for receiving an eccentric shaft (32); **characterized in that**
- at least six cylinders (12, 14, 16, 22, 24, 26) opened out into the bore (30) are provided to receive one pump piston (1, 2, 3, 4, 5, 6) each, wherein the cylinders are disposed in pairs in at least three mutually spaced apart planes (A-A, B-B, C-C) and are divided into two sets, wherein in each case three cylinders disposed on different planes form a set and wherein the first set of cylinders (52₁, 52₂, 52₃) is associated with the first brake circuit (56) and the second set of cylinders (52₄, 52₅, 52₆) is associated with the second brake circuit (58).

2. The motor vehicle brake system (50) according to claim 1, wherein the piston pump housing (10) further comprises at least one fluid channel (40, 42, 44, 46) running in a straight line that connects at least three cylinders, which are disposed on different planes, to one another.

3. The motor vehicle brake system (50) according to claim 2, **characterized in that** at least two fluid channels running in a straight line are provided, wherein the first fluid channel connects the cylinders of the first set to one another and the second fluid channel connects the cylinders of the second set to one another.

4. The motor vehicle brake system (50) according to claim 2 or 3, **characterized in that** each fluid channel is closed at its first end by a closure element and/or opens out at its second end into a fluid port.

5. The motor vehicle brake system (50) according to one of claims 2 to 4, **characterized in that** two cylinders of the same set that are disposed in adjacent planes have an angular distance from one another at right angles to the bore.

6. The motor vehicle brake system (50) according to one of claims 1 to 5, **characterized in that** the distance between two adjacent planes is smaller than the maximum diameter of a cylinder.

7. The motor vehicle brake system (50) according to one of claims 1 to 6, **characterized in that** the two cylinders disposed in a plane lie approximately opposite one another.

8. The motor vehicle brake system (50) according to one of claims 1 to 7, **characterized in that** within a plane the angular distance of the two cylinders disposed in the plain is approximately at least 135° in relation to the bore.

9. The motor vehicle brake system (50) according to claim 8, **characterized in that** within a plane the angular distance of the two cylinders disposed in the plane is approximately 150° in relation to the bore.

10. The motor vehicle brake system (50) according to one of the proceeding claims, wherein the hydraulic pressure generator (52) further comprises:
- pump pistons (1, 2, 3, 4, 5, 6) accommodated in the cylinders (12, 14, 16, 22, 24, 26) of the piston pump housing (10); and
- an eccentric shaft (32) accommodated in the bore (30) of the housing for actuating the pump pistons.

11. The motor vehicle brake system (50) according to claim 10, **characterized in that** on the eccentric shaft (32) one eccentric per plane is provided and the three eccentrics are disposed relative to one another in angular positions of approximately 0°, 120° and 240° in relation to an axis of the eccentric shaft (32).

12. The motor vehicle brake system (50) according to claim 10, further comprising an electromotive drive (54) for the eccentric shaft (32).

13. A method of operating a hydraulic pressure generator (52) in a motor vehicle brake system (50) with a first brake circuit (56) and a second brake circuit (58), wherein the hydraulic pressure generator (52) possesses a piston pump having six cylinders each having one pump piston (52₁, 52₂, 52₃, 52₄, 52₅, 52₆) accommodated therein, and wherein the pump pistons are disposed in pairs in at least three mutually spaced apart planes (A-A, B-B, C-C) and wherein in each case three cylinders disposed in different planes form a set and wherein the first set of pump pistons is associated with the first brake circuit (56) and the second set of pump pistons is associated with the second brake circuit (58), comprising the step of actuating the pump pistons in such a way that a phase displacement between a top dead center of the one piston and a bottom dead center of the other piston of one at the same plane is approximately 30° and a minimum phase displacement of dead centers of the pump pistons of different planes is likewise approximately 30°.

## Revendications

1. Système de freinage de véhicule automobile (50) comportant un premier circuit de freinage (56), un second circuit de freinage (58) et un générateur de pression hydraulique (52) avec un boîtier de pompe à pistons (10), ledit boîtier de pompe à pistons (10) comprenant :
- un alésage (30) permettant de loger un arbre à excentrique (32), **caractérisé en ce qu'**il est prévu
- au moins six cylindres (12, 14, 16, 22, 24, 26) qui débouchent dans ledit alésage (30) et sont destinés à recevoir un piston de pompe (1, 2, 3, 4, 5, 6) chacun, les cylindres étant disposés par deux dans au moins trois plans (A-A, B-B, C-C) espacés les uns des autres et répartis en deux jeux, au moins trois cylindres disposés dans des plans différents formant toujours un jeu, et le premier jeu de cylindres (52₁, 52₂, 52₃) étant associé au premier circuit de freinage (56), et le second jeu de cylindres (52₄, 52₅, 52₆), au second circuit de freinage (58).

2. Système de freinage de véhicule automobile (50) selon la revendication 1, le boîtier de pompe à pistons (10) comprenant en outre au moins un canal fluidique (40, 42, 44, 46) qui s'étend de manière rectiligne et relie entre eux au moins trois cylindres disposés dans des plans différents.

3. Système de freinage de véhicule automobile (50) selon la revendication 2, **caractérisé en ce qu'**il existe au moins deux canaux fluidiques s'étendant de manière rectiligne, le premier canal fluidique reliant entre eux les cylindres du premier jeu, et le second canal fluidique, les cylindres du second jeu.

4. Système de freinage de véhicule automobile (50) selon la revendication 2 ou 3, **caractérisé en ce que** chaque canal fluidique est obturé, à sa première extrémité, par un élément obturateur et/ou débouche, à sa deuxième extrémité, dans un raccord fluidique.

5. Système de freinage de véhicule automobile (50) selon l'une des revendications 2 à 4, **caractérisé en ce que** deux cylindres d'un même jeu disposés dans des plans voisins affichent, l'un par rapport à l'autre et perpendiculairement à l'alésage, un écart angulaire.

6. Système de freinage de véhicule automobile (50) selon l'une des revendications 1 à 5, **caractérisé en ce que** l'écart entre deux plans voisins est inférieur au diamètre maximal d'un cylindre.

7. Système de freinage de véhicule automobile (50) selon l'une des revendications 1 à 6, **caractérisé en ce que** les deux cylindres disposés dans un plan sont approximativement opposés.

8. Système de freinage de véhicule automobile (50) selon l'une des revendications 1 à 7, **caractérisé en ce que** l'écart angulaire entre les deux cylindres disposés dans un plan est, en dedans du plan et par rapport à l'alésage, environ au moins de 135°.

9. Système de freinage de véhicule automobile (50) selon la revendication 8, **caractérisé en ce que** l'écart angulaire entre les deux cylindres disposés dans un plan est, en dedans du plan et par rapport à l'alésage, environ au moins de 150°.

10. Système de freinage de véhicule automobile (50) selon l'une des revendications précédentes, le générateur de pression hydraulique (52) comportant en outre :
- des pistons de pompe (1, 2, 3, 4, 5, 6) logés dans les cylindres (12, 14, 16, 22, 24, 26) du boîtier de pompe à pistons ; et
- un arbre à excentrique (32) logé dans l'alésage du boîtier (30) et permettant d'actionner les pistons de pompe.

11. Système de freinage de véhicule automobile (50) selon la revendication 10, **caractérisé en ce qu'**il est prévu, par plan, un excentrique sur l'arbre à excentrique (32) et **en ce que** les trois excentriques sont disposés les uns par rapport aux autres selon des positions angulaires d'environ 0°, 120° et 240° par rapport à un axe de l'arbre à excentrique (32).

12. Système de freinage de véhicule automobile (50) selon la revendication 10, comportant un entraînement à moteur électrique (54) pour l'arbre à excentrique (32).

13. Procédé permettant le fonctionnement d'un générateur de pression hydraulique (52) dans un système de freinage de véhicule automobile (50) comportant un premier circuit de freinage (56) et un second circuit de freinage (58), le générateur de pression hydraulique (52) possédant une pompe à pistons avec six cylindres contenant chacun un piston (52₁, 52₂, 52₃, 52₄, 52₅, 52₆) (10), les pistons de pompe étant disposés par paires dans au moins trois plans (A-A, B-B, C-C) espacés les uns des autres, et trois cylindres disposés dans des plans différents formant toujours un jeu, et le premier jeu de pistons de pompe étant associé au premier circuit de freinage (56), et le second jeu de pistons de pompe, au second circuit de freinage (58), ledit procédé comprenant comme étape l'actionnement des pistons de pompe de manière à avoir un décalage de phase entre un point mort haut de l'un des pistons et un point mort bas de l'autre piston d'un même plan d'environ 30° et un décalage de phase minimum entre les points morts des pistons de pompe de plans différents également d'environ de 30°.
